**Europäisches Patentamt**

**European Patent Office**

**Office européen des brevets**

(11) Veröffentlichungsnummer: **0 403 895**
**A2**

(12) **EUROPÄISCHE PATENTANMELDUNG**

(21) Anmeldenummer: **90110915.7**

(22) Anmeldetag: **08.06.90**

(51) Int. Cl.5: **B08B 3/10, E01H 15/00**

(30) Priorität: **21.06.89 DE 3920342**

(43) Veröffentlichungstag der Anmeldung:
**27.12.90 Patentblatt 90/52**

(84) Benannte Vertragsstaaten:
**AT FR NL**

(71) Anmelder: **PROCUREMENT & PRODUCTS GmbH**
**Wildensteinstrasse 21**
**D-7000 Stuttgart 30(DE)**

Anmelder: **UWA UMWELTANALYTIK GmbH**
**Gabriel-Max-Strasse 26**
**D-8000 München 90(DE)**

(72) Erfinder: **Doering, Falk R., Dr.**
**Konrad-Peutinger Strasse 15**
**D-8000 München 70(DE)**
Erfinder: **Decristoforo, Peter, Dipl.-Ing.**
**Gabriel-Max-Strasse 26**
**D-8000 München 90(DE)**

(74) Vertreter: **von Puttkamer, Nikolaus, Dipl.-Ing.**
**Pienzenauerstrasse 2**
**D-8000 München 80(DE)**

(54) **Verfahren zum Dekontaminieren eines schadstoffbelasteten Erdbodenbereiches.**

(57) Die Erfindung betrifft ein Verfahren zum Dekontaminieren eines schadstoffbelasteten Erdbodenbereiches (GA). Ein belastender, elektrokinetisch transportierbarer Schadstoff (QS), der in einem eine elektrisch leitende Flüssigkeit enthaltenden Erdbodenbereich (GL) und/oder in einem durch Flüssigkeitszugabe künstlich leitfähig gemachten Bodenbereich und/oder in einem durch Einwirken von Wärme thermisch ionisierten Bodenbereich und/oder in einem durch Einleiten von Gasen oder Aerosolen leitfähig gemachten Bodenbereich enthalten ist, wird elektrophoretisch an wenigstens einer vorbestimmten Stelle (BH) im Erdbodenbereich (GA) gesammelt.

EP 0 403 895 A2

Fig. 1

## Verfahren zum Dekontaminieren eines schadstoffbelasteten Erdbodenbereiches

Die Erfindung betrifft gemäß dem Oberbegriff des Patentanspruches 1 ein Verfahren zum Dekontaminieren eines schadstoffbelasteten Erdbodenbereiches.

Zur Dekontaminierung eines beispielsweise mit Quecksilber verseuchten Erdbodenbereiches ist es bisher üblich, den Erdbodenbereich auszuheben und insgesamt in einem gesicherten Einschluß zu deponieren. Ein Nachteil besteht dabei darin, daß dieses Verfahren sehr kostenintensiv ist. Zudem erfordert es wertvolle Sondermülldeponien, die dann anderweitig nicht mehr zur Verfügung stehen. Außerdem sind der Abbau und der Transport des Erdbodenbereiches mit Gefahren für die Umgebung verbunden. Schließlich stellt das genannte Verfahren keine befriedigende Lösung dar, weil der verseuchte Erdboden lediglich an andere Orte verlagert wird.

Zur Zeit werden daher Versuche angestellt, das zuvor genannte Aushubverfahren durch Zusatzeinrichtungen zu ergänzen, derart, daß die Quecksilberkontaminierung in Spezialöfen thermisch ausgetrieben wird. Es bleibt dabei toter mineralisierter Boden zurück.

Weitere Probleme der beiden zuvor genannten Verfahren bestehen darin, daß der Abbau des verseuchten Erdbodens in einer offenen Baugrube erfolgen muß. Dabei treten naturgemäß Ausgasungen der Schadstoffe aus der offenen Baugrube auf, die wiederum zu einer unzulässigen Immissionsbelastung der Umgebung, insbesondere zu warmen Jahreszeiten führt, und auch die Gefahr der Windbelastung mit sich bringt. Dasselbe gilt gleichermaßen für den Transport und die Transportwege. Hierzu kommen die aus dem Tiefbaubereich sattsam bekannten Probleme, die zum Beispiel das Anschneiden von Grundwasserleitern mit entsprechend aufwendigen Wasserhaltungs- und Sicherungsmaßnahmen (Spundwände, Pfahlwände, Kryotechnologien etc.) betreffen. Ferner ist bedingt durch die Art der Kontaminierung sehr oft eine Tiefenwanderung feststellbar, so daß oftmals große Sanierungstiefen erforderlich wären, die tatsächlich aber aus statischen Gründen, insbesondere im verbauten Raum nicht mehr beherrschbar sind.

Aufgabe der Erfindung ist es daher, ein geländeschonendes, effektives "In-Situ"-Verfahren zum Dekontaminieren eines mit einem oder mehreren bestimmten ionisierbaren Stoffen und/oder elementaren Metallen, wie beispielsweise Quecksilber belasteten Erdbodenbereiches anzugeben, das schwerwiegende Eingriffe in das Gelände oder dessen Untergrund, wie z.B. Bodenabtragungen, Bodentieffrierungen oder Grundwasserabsenkungen und damit auch gegebenenfalls die Gefahr einer Beeinträchtigung von Gebäuden vermeidet.

Diese Aufgabe wird durch die im kennzeichnenden Teil des Patentanspruches 1 angegebenen Merkmale gelöst.

Voraussetzung für die Anwendung des erfindungsgemäßen Verfahrens ist demnach ein elektrokinetisch transportierbarer Schadstoff. Ferner sind folgende Bedingungen alternativ oder gemeinsam zu erfüllen:

1) Eine im belasteten Erdbodenbereich enthaltene, elektrisch leitende Flüssigkeit;

2) Durch Zusatzmaßnahmen ionisierbare Bodenbereiche (z.B. Zugabe von Wärme, um so eine ionisierbare Strecke aufzubauen. Bei 50°C sind beispielsweise etwa 126 mg Hg-Dampf/m in der Bodenluft enthalten).

3) Zweckmäßigerweise kontrolliertes Einbringen von leitfähigen Flüssigkeiten in den ungesättigten Erdbodenbereich.

Durch diese Maßnahmen wird jeweils erreicht, daß beim Anlegen eines dem Schadstoff angepaßten elektrischen Feldes eine elektrophoretische Wanderung des Schadstoffes zur Anode oder zur Kathode erfolgt.

Als elektrisch leitende Flüssigkeit kommt in erster Linie leitfähiges Wasser in Frage, das im Erdbodenbereich, beispielsweise in einem schadstoffbelasteten Grundwasserleiter natürlich vorhanden oder auch künstlich eingebracht sein kann.

Unter elektrokinetisch transportierbaren Stoffen sind alle Stoffe oder Verbindungen zu verstehen, die die Eigenschaft haben, im elektrischen Feld entsprechend ihrer Ladung zu wandern.

Ein Vorteil des erfindungsgemäßen Verfahrens besteht auch darin, daß durch entsprechende Wahl des Elektrodenmaterials, der Spannung und der Stromstärke eine Reduktion bzw. Oxidation von verschiedenen Stoffen im Bodenbereich stattfinden kann und auch hierbei eine Wanderung zur positiven oder negativen Elektrode erfolgt. Hierdurch können nicht mobile Stoffe mobilisiert werden und umgekehrt.

Das erfindungsgemäße Verfahren läßt sich besonders vorteilhaft zum Dekontaminieren eines quecksilberbelasteten Erdbodenbereichs anwenden, in dem gemäß Anspruch 2 der Schadstoff Quecksilber ist, das in Form von elementarem Quecksilber oder in Form von ionisierbaren Verbindungen im Erdboden vorliegt. Dieses Quecksilber und diese Verbindungen können bei dem erfindungsgemäßen Verfahren kathaphoretisch gesammelt und entfernt werden.

Vorteilhaft ist es, wenn gemäß Anspruch 3 ein pulsierendes elektrisches Feld eingesetzt wird. Dadurch kann eine unerwünschte Elektrolyse in dem die elektrisch leitende Flüssigkeit enthaltenden Erdbodenbereich eingeschränkt werden und überdies kann in Bezug auf den Stoff eine Stoßmobilisierung bzw. ein Losreißeffekt erzielt werden, der sich besonders günstig bei Quecksilber auswirkt, das eine sehr hohe Oberflächenspannung hat.

Das die Elektrophorese erzeugende elektrische Feld in dem die elektrisch leitende Flüssigkeit enthaltenden Erdbodenbereich kann mit Hilfe von in diesem Bereich eingebrachten Elektroden durch Anlegen einer Gleichspannung an diese Elektroden erzeugt werden, wobei zweckmäßigerweise eine pulsierende Gleichspannung durch Einund Ausschalten oder auch durch Umpolen oder ähnliche Maßnahmen erreicht wird. Durch ein kurzzeitiges Umpolen kaum vorteilhafterweise ein zusätzlicher Losreiß- bzw. Mobilisierungseffekt bewirkt werden. Anders ausgedrückt können festsitzende Ladungsträger durch das kurzzeitige Umpolen "freigeschaukelt" werden. Je nach Natur des Schadstoffes wird dieser katha- und/oder anaphoretisch gesammelt, d.h. an der als Kathode bzw. als Anode benutzten Elektrode.

Besonders zweckmäßig ist es, wenn gemäß Anspruch 4 ein im wesentlichen radiales elektrisches Feld erzeugt wird, in dessen Zentrum der Schadstoff katha- oder anaphoretisch gesammelt wird.

Ein solches radiales elektrisches Feld wird zweckmäßigerweise durch eine Elektrodenanordnung erzeugt, wie sie im Anspruch 5 definiert ist.

Besonders zweckmäßig ist es in diesem Fall, mehrere zentrale Elektroden in geometrischen Formen anzuordnen, die eine flächendeckende Anordnung und eine große Packungsdichte ermöglichen, wobei der Abstand zwischen Kathode und Anode jeweils annähernd gleich groß ist und sich die einzelnen geometrischen Figuren nicht überschneiden. Dies wird vorzugsweise gemäß Anspruch 7 durch ein polygon- bzw. wabenförmiges Netz erreicht, das den Erdbodenbereich überspannt.

Andere vorteilhafte Ausgestaltungen der Erfindung gehen aus weiteren Unteransprüchen hervor. Die Erfindung wird am Beispiel eines quecksilberver seuchten und Grundwasser enthaltenden Bodenbereichs an Hand der Figuren in der nachfolgenden Beschreibung näher erläutert. Es zeigt:

Fig. 1 eine Draufsicht auf den quecksilberbelasteten Erdbodenbereich mit eingebrachten Elektroden zur Erzeugung eines elektrischen Feldes im Grundwasserleiter;

Fig. 2 einen vertikalen Schnitt durch den einen Grundwasserleiter-Bereich und einen darüberliegenden ungesättigten Bodenbereich umfassenden Erdbodenbereich nach Fig. 1 längs der Linie II-II;

Fig. 3 in Draufsicht eine Anordnung von Elektroden nach Maßgabe eines den Erdbodenbereich überspannenden wabenförmigen Netzes; und

Fig. 4 und 5 Weiterbildungen der Erfindung.

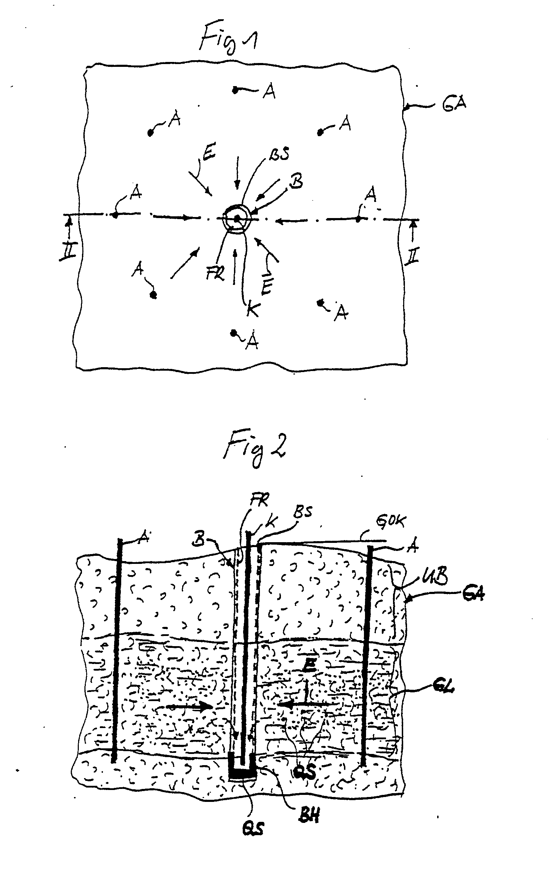

Der Erdbodenbereich GA nach den Fig. 1 und 2 weist in der Tiefe einen grundwasserleiter GL auf, der wie die darüberliegende Bodenzone bis zur Geländeoberkante GOK mit Quecksilber belastet sei. Bei der typischen Grundwassertemperatur von beispielsweise 10°C liegt das Quecksilber QS an den Bodenpartikeln des Grundwasserleiters GL und des darüberliegenden ungesättigten Bodenbereiches UB in adhäsiver Form an. In dem darüber befindlichen ungesättigten Bodenbereich UB kann dagegen das Quecksilber auch in der Gasphase entsprechend dem Dampfdruck bei der vorherrschenden Bodentemperatur vorliegen. Zur Erhöhung des gasförmigen Hg-Anteils ist es vorteilhaft, wenn über Lanzen Warmluft in den Bereich UB eingebracht wird.

Der Grundwasserleiter GL ist wegen der guten elektrischen Leitfähigkeit des Grundwassers hervorragend zur elektrophoretischen Sammlung des flüssigen Quecksilbers geeignet. Das in Lufteinschlüssen des Bereiches GL enthaltene gasförmige Quecksilber und das als gasförmiges Quecksilber im Bereich UB enthaltene Quecksilber kann zugleich durch einen Unterdruck abgesaugt werden, wie dies später näher erläutert wird.

Eine zweckmäßige Vorrichtung zur Durchführung beider Verfahren ist in den Fig. 1 und 2 dargestellt. Bei dieser Vorrichtung ist in den Erdbodenbereich GA ein Brunnen abgeteuft, dessen Brunnenröhre BS sich durch den Grundwasserleiter GL erstreckt. An diesem Brunnen wird ein Unterdruck angelegt, über den die Bodenluft mit dem darin enthaltenen dampfförmigen Quecksilber abgesaugt wird. Das abgesaugte Quecksilber kann dann durch eine nicht dargestellte Kondensationsanlage und/oder adsorptive Reinigungseinrichtung entfernt werden, wobei die gereinigte Luft an die Umgebung unter Berücksichtigung der gesetzlichen Vorgaben abgegeben oder im Umlaufver fahren wieder in den Bodenbereich GA eingeleitet wird.

In der Mitte des Brunnens B ist eine lanzenförmige zentrale Elektrode K angeordnet, die sich sowohl durch den Grundwasserleiter GL als auch durch den ungesättigten Bodenbereich UB erstreckt und dem Elektrophoreseverfahren als Kathode dient.

In einiger Entfernung vom Brunnen B, beispielsweise in einem Abstand von etwa 6m sind in dem Erdboden mehrere, beispielsweise 16 lanzenförmige Elektroden A, in den Bodenbereich GA eingebracht, die um die zentrale Elektrode K herum verteilt sind, und dem Elektrophoreseverfahren in dieser Anordnung als Anode dienen.

Durch Anlegen einer Spannung von beispielsweise 1 Volt zwischen den Elektroden A und der zentralen Elektrode K wird im Grundwasserleiter GL und im Bereich UB ein radial auf die Kathode K gerichtetes Feld E erzeugt, in dessen Richtung der durch die angelegte Spannung bewirkte elektrische Strom im Grundwasserleiter GL und in dem darüber befindlichen ungesättigten Bereich UB durch thermische Ionisation Quecksilberionen zum Brunnen B wandern läßt.

Damit möglichst ungestörte Leitungsverhältnisse von der Anode zur Kathode vorliegen, besteht ein in der Brunnen röhre BS angeordnetes Brunnenrohr aus einem perforierten Filterrohr FR aus beispielsweise Kunststoff, das sich durch den ganzen Grundwasserleiter GL und durch den Bereich UB erstreckt und an das sich unten ein Auffanggefäß BH zum Auffangen von Quecksilber dicht anschließt.

Das durch die Elektrophorese gewonnene Quecksilber tropft an der Wand des Brunnens B nach unten in das Auffanggefäß BH ab, wird in diesem Gefäß gesammelt und kann dadurch z.B. durch Hochziehen des Gefäßes BH nach oben oder durch andere Maßnahmen entfernt werden.

Zur Stoßmobilisierung des Quecksilbers und zur Vermeidung von unerwünschten Elektrolysevorgängen im Grundwasserleiter GL wird zwischen die Elektroden A und die zentrale Elektrode K vorzugsweise ein pulsierender Gleichstrom mit einer Taktfrequenz von beispielsweise 30 oder 60 Impulsen/Minute angelegt. Durch ein kurzzeitiges Umpolen kann zusätzlich ein Losreiß- bzw. Mobilisierungseffekt erreicht werden. Durch das kurzzeitige Umpolen können anders ausgedruckt festsitzende Ladungsträger "freigeschaukelt" werden.

Bei einer Spannung von 1V und einer verfügbaren Stromstärke von bis zu 600 A aus dem Leitungssnetz läßt sich bei der Anordnung nach den Fig. 1 und 2 mit 6m Elektrodenabstand eine Quecksilberrückgewinnung von einigen kg pro Tag erwarten.

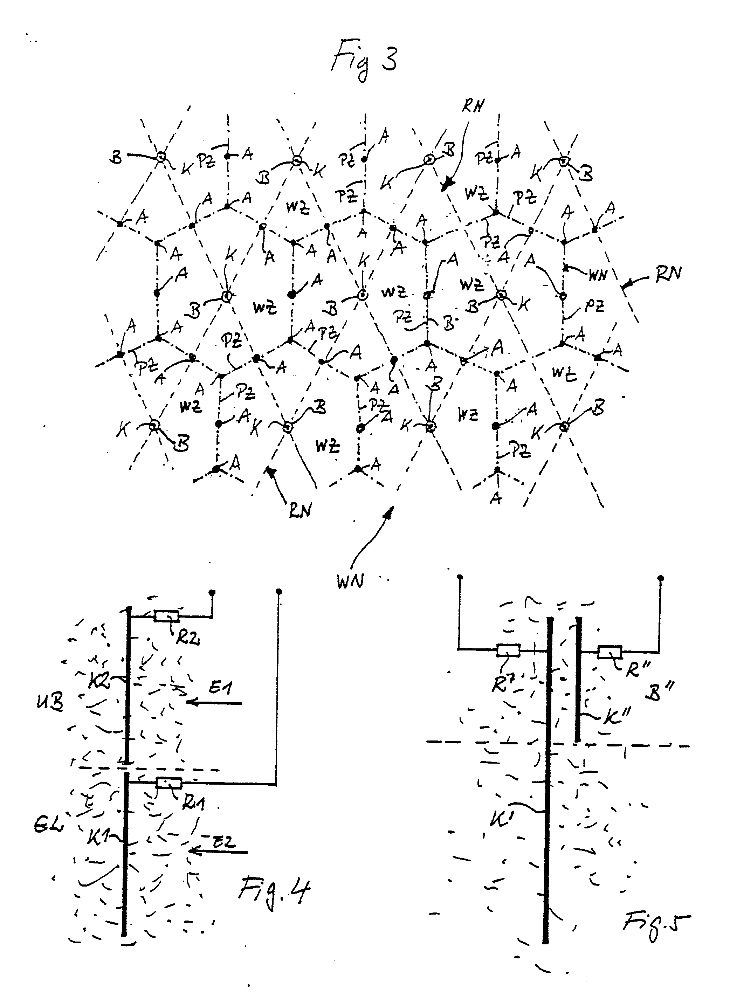

Bei größeren Flächen müssen mehrere Anordnungen nach den Fig. 1 und 2 nebeneinander verwendet werden, wobei es dann zweckmäßig ist, die Elektroden A auf Netzlinien eines den Bodenbereich überspannenden waben- oder polygonförmigen Netzes WN anzuordnen, wobei in jeder Waben-oder Polygonzelle WZ dieses Netzes WN ein Brunnen B mit zentraler Elektrode K anzuordnen ist, so wie es in der Fig. 3 dargestellt ist. Bei dieser Anordnung sind beispielsweise die Brunnen B und zentralen Elektroden K auf Schnittpunkten von Netzlinien eines den Erdbodenbereich GA überspannenden rautenförmigen Netzes RN angeordnet und jede Zelle WZ ist durch einen vorzugsweise sechseckförmigen Polygonzug PZ definiert, der die betreffende zentrale Elektrode K umschreibt.

Das wabenförmige Netz WN hat den Vorteil, daß im Bereich jeder Wabenzelle WZ der Schadstoff elektrophoretisch nur zur Mitte dieser Zelle transportiert wird und daß ein Transport von einer Zelle WZ zu einer anderen ausgeschlossen werden kann.

In der Fa. 4 ist eine Weiterbildung der Erfindung dargestellt, bei der die zentrale Elektrode wenigstens zwei serielle, zentrale Elektroden K1, K2 unterschiedlich starke Felder E1, E2 zum Dekontaminieren unter schiedlich leitfähiger Bereiche GL, UB des Bodenbereiches GA aufbaubar sind. Zum unterschiedlichen Bestromen der Elektroden K1 und K2 werden diese vorzugsweise über eigene, unterschiedliche Vorwiderstände angesteuert. Es kann durch diese Weiterbildung der Erfindung eine individuelle Anpassung an den zu dekontaminierenden Bodenbereich GA erreicht werden .

Gemäß Fig. 5 ist auch eine Weiterbildung der Erfindung denkbar, bei der eine weiterer Elektrode $K''$ vorgesehen ist. die über wenigstens einen Teilbereich der zentralen Elektrode $K'$ parallel zu dieser und von dieser beabstandet verläuft. Mit der Hilfe dieser weiteren Elektrode $K''$ kann kurzzeitig oder permanent in einem ihr zugeordneten Bereich $B''$ des Bodenbereiches GA eine vergleichsweise höhere Energiedichte z.B. zur Einleitung eines Zündvorganges erzeugt werden. Vorzugsweise werden die zentrale Elektrode $K'$ und die weitere Elektrode $K''$ über eigene Vorwiderstände $R'$ udn $R''$ bestromt. Auch durch diese Weiterbildung kann eine individuelle Anpassung an örtliche Gegebenheiten erfolgen. Der Vorwiderstand $R''$ kann hierzu variabel sein.

Das Material der zentralen Elektrode K bzw. K1, K2 bzw. $K'$, $K''$ und/oder das Material der um diese gruppierten Elektroden A kann zur Oxidation oder Reduktion der jeweiligen Schadstoffe ausgewählt werden. Beispiels weise kann dann, wenn die Anode aus Fell besteht, diese Elektrodenabgabe eine Reduzierung von Schadstoff in der Form CrVI zu einem niederwertigeren Chrom erfolgen, das besser mobilisierbar ist. Anders ausgedrückt kann eine Oxidation oder Reduktion von Schadstoffen derart erfolgen, daß eine leichtere Mobilisierung und Dekontaminierung möglich wird.

Das beschriebene Verfahren eignet sich nicht nur zur Schadstoffbeseitigung, sondern auch für die Anreicherung, Gewinnung und gegebenenfalls die Regenerierung und Reinigung von Stoffen im Bodenbereich.

## Ansprüche

1. Verfahren zum Dekontaminieren eines schadstoffbelasteten Erdbodenbereiches (GA), dadurch gekennzeichnet, daß ein belastender elektrokinetisch transportierbarer Schadstoff (QS), der in einem eine elektrisch leitende Flüssigkeit enthaltenden Erdobdenbereich (GL) und/oder in einem durch Flüssigkeitszugabe künstlich leitfähig gemachten Bodenbereich und/oder in einem durch Einwirken von Wärme thermisch ionisierten Bodenbereich und/oder in einem durch Einleiten von Gasen oder Aerosolen leitfähig gemachten Bodenbereich enthalten ist, elektrophoretisch an wenigstens einer vorbestimmten Stelle (BH) im Erbodenbereich (GA) gesammelt wird.

2. Verfahren nach Anspruch 1, dadurch gekennzeichnet, daß der Schadstoff (QS) elementares Quecksilber ist.

3. Verfahren nach Anspruch 1 oder 2, dadurch gekennzeichnet, daß ein die Elektrophorese des Schadstoffs (QS) erzeugendes elektrisches Feld (E) abwechselnd einund ausgeschaltet wird und/oder kurzzeitig umgepolt wird.

4. Verfahren nach einem der Ansprüche 1 bis 3, dadurch gekennzeichnet, daß in dem die elektrisch leitende Flüssigkeit enthaltenden schadstoffbelasteten Erdbodenbereich (GL)und/oder in einem durch Einleiten von Gasen oder Aerosolen leitfähig gemachten Bodenbereich ein im wesentlichen radiales elektrisches Feld (E) erzeugt wird, in dessen Zentraum (bei K) der Schadstoff (QS) katha- oder anaphoretisch gesammelt wird.

5. Verfahren nach Anspruch 4, dadurch gekennzeichnet, daß das Feld (E) durch zumindest eine zentrale Elektrode (K) und durch mit Abstand um die zentrale Elektrode (K) gruppierte Elektroden (A) erzeugt wird, wobei sämtliche Elektroden (K, A) in dem die elektrisch leitende Flüssigkeit enthaltenden Erdbodenbereich · (GL) und/oder in einem durch Einleiten von Gasen oder Aerosolen leitfähig gemachten Bodenbereich eingebracht sind.

6. Verfahren nach Anspruch 5, dadurch gekennzeichnet, daß die zentrale Elektrode (K) von einem Filterrohr (FR) umgeben ist, an dessen unterem Ende sich ein Sammelgefäß (BH) für den Schadstoff befindet.

7. Verfahren nach Anspruch 5 oder 6, dadurch gekennzeichnet, daß um mehrere zentrale Elektroden (K) gruppierte Elektroden (A) auf Netzlinien eines den Erdbodenbereich (GA) überspannenden, polygon- bzw. wabenförmigen Netzes (WN) angeordnet werden, wobei im Innern jeder Polygonbzw. Wabenzelle (WZ) des Netzes (WN) eine zentrale Elektrode (K) angeordnet ist.

8. Verfahren nach einem der Ansprüche 5 bis 7, dadurch gekennzeichnet, daß die zentrale Elektrode wenigstens zwei serielle zentrale Elektroden (K1, K2) aufweist, durch die horizontal übereinander geschichtete Felder ( E1, E2) zum Dekontaminieren unterschiedlich leitfähiger Schichten (GL, UB) des Bodenbereiches (GA) aufbaubar sind.

9. Verfahren nach Anspruch 8, dadurch gekennzeichnet, daß jede seriellen zentralen Elektrode (K1 , K2) über einen Vorwiderstand (R1, R2) bestromt wird.

10. Verfahren nach einem der Ansprüche 5 bis 7,dadurch gekennzeichnet, daß die zentrale Elektrode (K$'$) wenigstens eine weitere Elektrode (K$''$) aufweist, die wenigstens entlang eines Teilbereiches der zentralen Elektrode (K$'$) parallel zu dieser verläuft und durch die in einem ihr zugeordneten Bereich des Bodenbereichs (GA ) eine relativ höhere Energiedichte kurzzeitig oder permanet erzeugt wird.

11. Verfahren nach Anspruch 10, dadurch gekennzeichnet, daß die zentrale Elektrode (K$'$) und die weitere Elektrode (K$''$) über jeweils einen Vorwiderstand (R$'$ bzw. R$''$) bestromt werden.

12. Verfahren nach einem der Ansprüche 1 bis 11, dadurch gekennzeichnet, daß das Material der zentralen Elektrode (K; K1, K2; K$'$, K$''$) und/oder der um diese gruppierten Elektroden (A) so gewählt wird, daß eine elektrochemische Reduktion bzw. Oxidation der Schadstoffe erfolgt.

Fig 1

Fig 2

Fig 3

Fig. 4

Fig. 5